**Europäisches Patentamt**

**European Patent Office**

**Office européen des brevets**

(19)

(11) Numéro de publication : **0 383 832 B1**

# FASCICULE DE BREVET EUROPEEN

(12)

(45) Date de publication du fascicule du brevet :
**29.04.92 Bulletin 92/18**

(51) Int. Cl.$^5$ : **G01B 11/08,** G02B 27/40

(21) Numéro de dépôt : **89900256.2**

(22) Date de dépôt : **25.11.88**

(86) Numéro de dépôt international :
**PCT/FR88/00578**

(87) Numéro de publication internationale :
**WO 89/04946 01.06.89 Gazette 89/12**

(54) PROCEDE DE MESURE DE DIAMETRES DE FILS OU DE PROFILS OU PIECES CIRCULAIRES PAR DIFFRACTION DE RAYONS LUMINEUX ET DISPOSITIF POUR LA MISE EN OEUVRE DE CE PROCEDE.

(30) Priorité : **26.11.87 FR 8716611**

(43) Date de publication de la demande :
**29.08.90 Bulletin 90/35**

(45) Mention de la délivrance du brevet :
**29.04.92 Bulletin 92/18**

(84) Etats contractants désignés :
**AT BE CH DE FR GB IT LI LU NL SE**

(56) Documents cités :
**EP-A- 0 077 259
CH-A- 0 565 990
FR-A- 2 043 551
US-A- 4 183 623**

(56) Documents cités :
**Messen + Prüfen, vol. 19, No. 6, June 1983,
Bad Wörishofen (DE), U. Breitmeier:
"Anwendung der Lichtbeugung in der Längenmesstechnik" pages 329-335
Soviet Journal of Optical Technology, vol.41,
No.8, August 1974, A.N. Drozhzhin et al.:
"Spatial-frequency filter", page 479**

(73) Titulaire : **FARDEAU, Jean-Francois
Chemin de Bellepeire
F-13170 Les Pennes-Mirabeau (FR)**

(72) Inventeur : **FARDEAU, Jean-Francois
Chemin de Bellepeire
F-13170 Les Pennes-Mirabeau (FR)**

(74) Mandataire : **Santarelli, Marc
Cabinet Rinuy et Santarelli 14, avenue de la
Grande Armée
F-75017 Paris (FR)**

Jouve, 18, rue Saint-Denis, 75001 PARIS

## Description

La présente invention concerne un procédé de mesure de diamètres de fils ou profils ou pièces circulaires par diffraction de rayons lumineux. L'invention concerne également un dispositif pour la mise en oeuvre de ce procédé.

Le principe de base sur lequel est fondée l'invention est bien connu et il fait appel au phénomène de diffraction. Ce phénomène est particulièrement mis en évidence par un faisceau de lumière cohérente et monochromatique de longueur d'onde "$\delta$" dont les faisceaux parallèles sont repris et focalisés par une optique focale donnée sur un plan perpendiculaire à l'axe des rayons et placé au point focal de ladite optique.

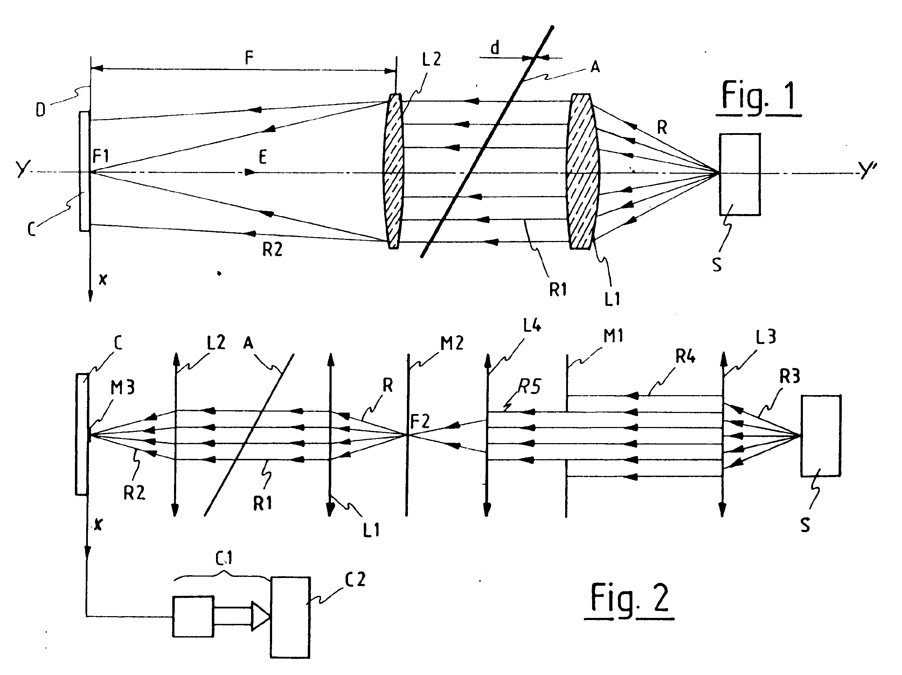

On a représenté sur la figure 1 des dessins annexés, de façon schématique, le dispositif connu faisant apparaître ce phénomène, figure sur laquelle : S désigne la source lumineuse, $L_1$ désigne l'optique fournissant un faisceau de rayons parallèles $R_1$ à partir du faisceau initial de rayons R, $L_2$ désigne l'optique de longueur focale F pour concentrer les rayons $R_2$ au foyer $F_1$ de cette optique et sur un plan D perpendiculaire à l'axe des rayons, plan dans lequel on dispose un dispositif de mesure de l'énergie diffractée désigné par la référence C, dont les signaux sont repris et analysés par tout moyen approprié.

Si l'on place alors dans le champ de lumière parallèle $R_1$ un objet A, comme par exemple, un fil de diamètre "d", ou même un diaphragme présentant une fente de diamètre "d", des franges de diffraction se forment sur le plan D. Le point milieu de la série des franges se confond avec l'axe optique Y,Y', et le pas, c'est-à-dire la distance séparant deux franges, est indépendant de la position de l'objet dans le champ. Ainsi, dans le cas d'un fil ou d'une fente, les franges sont réparties sur un axe passant par $F_1$, et perpendiculaire à l'axe physique dudit objet.

Le rappel de ce phénomène de diffraction connu, a été fait pour introduire les améliorations et simplifications importantes apportées par les dispositifs complémentaires ainsi que par les nouvelles méthodes proposées pour l'obtention du pas des franges qu'ils permettent. On détermine la valeur de "d" en appliquant la relation suivante de la répartition de l'énergie lumineuse "E", à savoir :

$$(1) \qquad E_{(x)} = d^2 \left[ \frac{\sin u}{u} \right]^2$$

$$(2) \qquad \text{Avec} : u_{(x)} = \frac{\pi.d.x.}{F.\delta}$$

La fonction "sin" est atténuée par la fonction "1/u". On en déduit l'enveloppe "V" du signal qui est ("d/u)$^2$ :

$$(3) \qquad V(x) = \left[ \frac{F.\delta}{\pi.x} \right]^2 = K. \frac{1}{x^2}$$

Le pas des alternances est donné par la période de la fonction "sin²u". La relation (2) permet alors de déduire la valeur du pas "xo" :

$$(4) \qquad xo = \frac{F\delta}{d} = \frac{X}{N}$$

D'une façon évidente, la mesure de "xo" s'obtient en mesurant "X" pour "N" franges.

A partir de ces résultats, on conçoit que l'on peut aisément déterminer la valeur du diamètre "d".

Or il se trouve que l'explication et l'exploitation du phénomène de diffraction, présenté ci-dessus, s'entend pour des signaux théoriquement idéaux. En pratique, les alternances sont entachées de bruits importants conduisant à des signaux d'allure peu sinusoïdale et la précision de positionnement des franges extrêmes est souvent réduite à plus ou moins une demi-frange divisée par le nombre de franges dans l'intervalle.

Pour améliorer la précision des mesures, il est nécessaire de réaliser des franges dont la répartition de l'énergie lumineuse soit très proche de la théorie et dont on pourra alors par traitement, après une conversion électrique très fidèle, déterminer le centre avec précision, puis calculer les distances entre franges. C'est là un des buts et des objets de l'invention prévoyant une source de lumière appropriée présentant les caractéristiques qui seront précisées ci-après. En effet, le rôle joué par la source lumineuse a une grande importance dans la précision recherchée.

A la connaissance du Demandeur, cette précision laisse à désirer du fait que l'on utilise généralement, comme décrit par exemple dans le document CH-A-565 990 et dans les brevets Français n°2335824 et 2275764, des sources laser, sans autre précision.

Or, si la source utilisée est du type Laser à gaz ou du type Laser à semi-conducteur à spectre d'émission très étroit, il n'en reste pas moins que ces faisceaux sont très sensibles aux particules de poussières et aux défauts des optiques utilisées qui donnent lieu à autant de systèmes de franges minuscules devenant sources de parasites et, par conséquent, au détriment de la précision des résultats recherchés.

Un élément cependant encore plus important provient du fait que le fil, la filière ou la bille en environnement industriel sont loin d'avoir des états de surface parfaits. Ces défauts de surfaces (rugosité), en présence de faisceaux laser non filtrés, provoquent des perturbations prédominantes sur le signal et ont pour effet de diminuer très fortement la précision de la mesure de la distance inter-franges.

Par ailleurs, les faisceaux de rayon émis directement par les sources limineuses du type Laser, actuellement utilisés, sont très peu uniformes du point de vue énergétique et ils présentent des fluctuations importantes dans la répartition de cette énergie, ce qui provoque également des perturbations dans les amplitudes des franges du spectre obtenu.

Le Volume 41 du (SOVIET JOURNAL OF OPTICAL TECHNOLOGY, N° 8, Août 1974, A.N. DROZHZHIN ET AL:"Spatial frequency filter", page 479) mentionne l'utilisation d'un diaphragme avec un orifice microscopique pour la réalisation de filtres de fréquence spatiale employé avec des sources laser ou autres. Ce document vise un dispositif de positionnement mécanique de filtre qui, tel quel, ne permet pas de réaliser la mesure de diamètres de fils ou pièces circulaires.

La présente invention, en utilisant un dispositif de filtrage des faisceaux de lumière, obvie aux inconvénients cités plus haut, en produisant un faisceau lumineux cohérent présentant une répartition spatiale homogène de l'énergie débarrassée des harmoniques spatiales, contrairement aux faisceaux laser décrits dans d'autres documents (ex : CH-A-565990) qui ne mentionnent pas de dispositifs de filtrage pour des applications industrielles. Dans ces conditions, le phénomène de diffraction est beaucoup moins sensible aux perturbations et les signaux obtenus sont alors très près des signaux théoriques.

En outre, pour parfaire encore la précision des mesures, il est nécéssaire que le capteur restitue parfaitement la forme originale du signal lumineux. L'utilisation de barettes de photodiodes type CCD linéaires, permet de convertir directement, et avec une très grande fidélité, l'énergie lumineuse en signal électrique. Pour des capteurs à barrettes photosensibles, on procède à un étalonnage préalable de la réponse point à point du capteur, afin de corriger par traitement la dispersion des réponses des points.

Par ailleurs, afin de ne pas saturer un tel capteur, le signal ou le pic d'énergie maximale est masqué ou annulé pour ne conserver, sur le spectre de diffraction obtenu, que les franges symétriques d'amplitude acceptable que l'on prend en compte dans l'analyse et le calcul des valeurs désirées.

Un avantage de la méthode réside en ce que la mesure est indépendante de la position de l'objet dans le champ. La seule restriction pour des fils ou des fentes provient de la nécessité de maintenir ces objets perpendiculaires au capteur.

Les avantages du dispositif par rapport aux dispositifs décrits par ailleurs proviennent de sa très grande simplicité et robustesse de construction, sa capacité à restituer des signaux très proches des fonctions théoriques en amplitude et position et à permettre des calculs du diamètre extrêmement précis. Cette conception permet la réalisation d'équipements de mesures industrielles efficients, simples, compacts et robustes, à l'opposé des dispositifs connus et notamment de celui décrit dans CH-A-565 990. En effet, l'appareil de mesure décrit dans ce document, bien qu'il mette en oeuvre le phénomène de diffraction, prévoit un dispositif de scanning mécanique comportant un masque rotatif de structure compliquée et encombrante qui, en tout état de cause, d'une part, limite la capacité de mesure de l'appareil à une très faible plage de diamètres pour un masque donné, et d'autre part, diminue la précision de la mesure-car il a pour effet d'intégrer le signal lumineux. De plus, cet appareil comporte un filtre optique d'affaiblissement de la frange centrale qui est difficile à réaliser et quine corrige pas la courbe d'affaiblissement du signal, ce qui a pour effet de réduire la précision de détection du centre d'une frange donnée. Le procédé et le dispositif proposés par la présente invention suppriment tous ces inconvénients.

Ainsi la présente invention fournit un procédé de mesure de diamètres de fils, de fentes ou pièces circulaires par diffraction de rayons lumineux consistant, à partir d'une source lumineuse monochromatique, à créer par filtrage de cette source, un champ de faisceau de rayons lumineux parallèles, cohérent, présentant une répartition spatiale homogène de l'énergie lumineuse, à placer ledit fil, ledit profil ou ladite pièce circulaire dans ledit champ en maintenant ce fil, ce profil ou cette pièce dans une orientation fixe, en ne lui permettant des déviations de position que parallèlement à lui-même (ou à elle-même), à focaliser lesdits rayons lumineux par une optique de longueur focale appropriée sur un capteur placé au point focal de ladite optique et dans un plan perpendiculaire à l'axe desdits rayons lumineux, à masquer la zone centrale recevant le flux maximum dudit faisceau à convertir'directement les images des franges de diffraction, situées de part et d'autre de cette zone centrale, en signaux électriques après avoir étalonné ledit capteur et, à analyser ces signaux qui sont fonction de la répartition de l'énergie lumineuse "E" suivant la relation :

$$E_{(x)} = d^2 \left[ \frac{\sin u}{u} \right]^2$$

ou

$$u_{(x)} = \frac{\pi . d . x}{F . \delta .}$$

avec

d = diamètre à évaluer,

x = distance par rapport au point focal,

F = distance focale de l'optique de focalisation des rayons lumineux,

$\delta$ = longueur d'onde de la source de lumière monochromatique.

Suivant d'autres caractéristiques :

. La répartition spatiale homogène de l'énergie lumineuse et sa cohérence sont obtenues en faisant passer tout le faisceau de rayons lumineux au travers d'un orifice de dimensions microscopiques ;

. La source monochromatique peut être une source de rayons laser à gaz ou à semi-conducteur, caractérisés par leur monochromaticité ;

. Le capteur doit être capable de restituer parfaitement la forme originale du signal lumineux aussi bien en amplitude qu'en position.

L'invention vise également un dispositif pour la mise en oeuvre du procédé ci-dessus. De façon avantageuse, un tel dispositif comporte :

. une source lumineuse monochromatique telle qu'un laser à gaz ou a semi-conducteur ;

. un diaphragme à orifice de dimension microscopique situé sur le chemin des rayons émis par cette source et dans) l'axe optique placé au point focal d'une lentille de collimation ;

. une optique de focale donnée ;

. un capteur linéaire (alignement de points photosensibles) situé dans le plan focal de cette optique et perpendiculairement à cet axe optique ;

. un masque disposé sur la zone médiane centrale dudit capteur et,

. un système convertisseur analyseur-calculateur relié audit capteur.

Suivant une variante, le diaphragme à orifice de dimension microscopique est remplacé par un système à fibre optique.

D'autres avantages et caractéristiques de l'invention ressortiront plus clairement de la description qui va suivre faite en regard des dessins annexés sur lesquels :

. la figure 1 est, comme indiqué précédemment, un schéma optique illustrant le phénomène connu de diffraction ;

. la figure 2 est un schéma optique illustrant le procédé selon l'invention ;

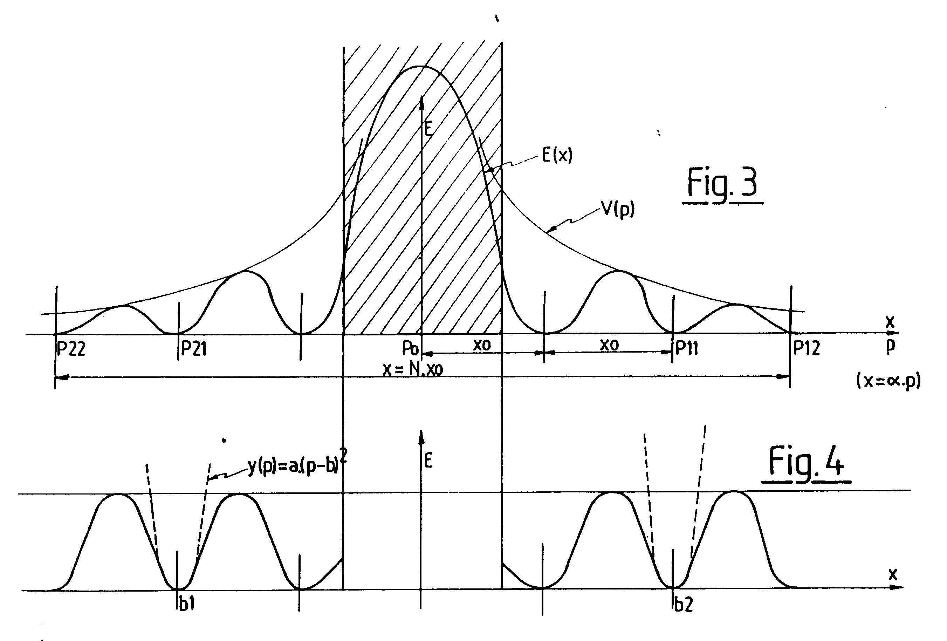

. la figure 3 est la courbe de répartition de l'énergie lumineuse et la figure 4 est une courbe obtenue après correction de la courbe illustrée à la figure 3.

En se référant à ces figures, on a représenté à la figure 2 le schéma d'un dispositif optique pour la mise en oeuvre du procédé selon l'invention ; sur cette figure, les références déjà utilisées pour commenter la figure 1 le sont pour désigner les mêmes éléments ou les éléments jouant le même rôle et ayant la même fonction.

La source S monochromatique telle qu'une source de rayons laser émet un faisceau de rayons $R_3$ qui est repris par une optique $L_3$ en un faisceau de rayons parallèles $R_4$ puis canalisé en un faisceau plus étroit $R_5$ par la présence d'un diaphragme $M_1$. Ce dernier faisceau est lui-même repris par une optique $L_4$ pour être focalisé sur un écran $M_2$ situé au plan focal de cette optique et présentant en $F_2$ un orifice microscopique émettant un flux de rayons R cohérent mais présentant une répartition spatiale homogène de l'énergie lumineuse. Suivant une variante, on peut faire appel à un système du type à fibre optique. Ce flux lumineux est transformé par l'optique $L_1$ en un faisceau de rayons parallèles lesquels sont focalisés par $L_2$ sur le capteur C. Ce dernier consiste, suivant un mode de réalisation préféré, en un capteur à photo-éléments - avantageusement, un tel capteur sera du type CCD linéaire à, par exemple, 1728 points dont les photo-éléments ont une dimension de 13 $\mu$ x 39 $\mu$ au pas de 13 $\mu$. Un tel capteur présente l'avantage de permettre l'obtention d'une grande résolution avec un encombrement réduit avec une grande stabilité de paramètres de mesure. Conformément à l'invention, la zone centrale est pourvue d'un masque ($M_3$) au droit de l'impact de flux lumineux maximum.

Ce capteur est relié à tout moyen approprié de conversion, d'analyse et de calcul tel qu'un convertisseur

analogique/numérique $C_1$ suivi d'un calculateur $C_2$.

Bien entendu, pour obtenir une réponse idéale de ce capteur, il y a lieu de l'étalonner et de normaliser les réponses des photo-éléments en niveau de noir et en sensibilité en fonction, notamment, de la température.

Il est également possible d'étalonner les pas des photo-éléments par tout dispositif approprié. Dans ces conditions, toutes les réponses des photo-éléments corrigées seront parfaitement identiques, les positions des franges seront connues, si bien que le signal électrique obtenu, représentera fidèlement $E_{(x)}$.

Un tel étalonnage permettant par conséquent l'identification des constantes entrant dans la mesure du diamètre recherché, peut se faire de la façon suivante :

Comme spécifié ci-dessus, la zone centrale du capteur est masquée pour éviter de le saturer par un apport de la très importante quantité d'énergie que représente le flux lumineux au niveau de l'axe optique du système.

Ceci étant, pour identifier les paramètres nécessaires au calcul final, paramètres qui ne sont fonction que du montage optique et mécanique, on provoque le phénomène de diffraction en plaçant un fil "A" (figure 2) dans le champ du rayon $R_1$, ce fil ayant un diamètre quelconque mais connu avec précision. Il est placé sensiblement orthogonalement par rapport au flux $R_1$ et par rapport au capteur C. Puis on procède à la suite de mesures et/ou des calculs exposée ci-après et dont on peut suivre le cheminement en se référant aux figures 3 et 4 - la partie hachurée de la figure 3 correspondant à la zone centrale masquée du capteur.

On cherche, de part et d'autre de la partie masquée, les franges symétriques de même amplitude. On évalue le pas des franges de part et d'autre du masque en repérant le premier passage à zéro, "Pij", puis le deuxième "Pij+1" dans l'échelle du capteur (les points P de la figure 3). Le pas se déduit de la relation (4) ci-dessus, soit :

$$(5) \qquad xo = \alpha.Po = \frac{F.\delta}{d}$$

Avec :

$$(6) \qquad Po - Pij + 1 - Pij$$

On obtient :

$$(7) \qquad d.Po = \frac{F.\delta}{\alpha} = A \text{ (constante évaluée)}$$

Sur chacune des deux franges symétriques, on évalue alors les positions "P11" et "P21" des deux passages à zéro, suivant chacune des deux alternances. Le centre "PO" des franges sur le capteur se situe au centre de ces deux positions. D'autre part, on détermine le nombre d'alternances entre ces deux franges (partie masquée par "P11-P21)/Po").

On peut, dès lors, évaluer la fonction d'amortissement V (p) pour correction à partir de la fonction (3) ci-dessus, soit :

$$(8) \qquad p = P - PO$$

$$(9) \qquad V(p) = \left[\frac{F.\delta}{\pi.\alpha.p}\right]^2 = \frac{K}{p^2}$$

On va donc multiplier, point par point, la fonction E(p). par 1/V (p) pour obtenir une fonction "F"(p) compensée de son amortissement et très proche de "$sin^2$".

Cette courbe corrigée, va permettre de reprendre le calcul du pas et du centre avec une meilleure précision, de recalculer un coefficient K plus précis et de retransformer la courbe initiale avec une meilleure précision. En générale la deuxième itération est amplement suffisante. Le centre des franges est alors obtenu comme pour la mesure des diamètres, par une méthode des moindres carrés.

La correction V(p) obtenue dépend d'une constante indépendante du diamètre à mesurer, et va s'appliquer systématiquement sur chaque acquisition du signal, pour effectuer les mesures de pas de la fonction "$sin^2$". Ce traitement s'effectue une fois, à chaque étalonnage du capteur.

On va calculer avec précision le paramètre "A" à partir du diamètre de référence, par la relation (7).

<u>Mesures des diamètres</u>

Il s'agit maintenant de déterminer la position d'un zéro entre deux franges successives, de part et d'autre du centre optique, assez éloignées pour que le nombre de franges intermédiaires "N" soit le plus grand possible.

Pour obtenir une bonne précision sur la position des zéros, il faut employer une méthode compensant les bruits restants sur le signal, sur une zone de traitement largement supérieure à la périodicité du bruit. La méthode employée est celle des moindres carrés à partir d'une fonction approchée du type :

$$(10) \qquad y(p) \ = \ a. \ (p - b)^2 \ = \ a.p^2 - 2. \ a.b.p. \ + \ a.b.^2$$

appliquée à la fonction "$\sin^2$" dans un intervalle +/- $\pi/4$. L'on recherche la coïncidence des centres de fonctions symétriques. "b" représente la position de l'axe de la fonction "y" et "a" la courbure. Pour réduire les itérations, il convient de donner à ces coefficients une valeur initiale très rapprochée de la valeur cherchée. La courbure "a" est déterminée au départ du calcul et restera fixe pour une même gamme de mesure. Le centre "b" sera calculé systématiquement.

Ces valeurs s'obtiennent à partir des valeurs de la fonction "$\sin^2$" prises à mi-hauteur des valeurs crêtes situées de part et d'autre des deux zéros.

La valeur initiale du centre, "bO" correspondra à la position milieu de ces points.

$$(11) \qquad a \ = \frac{Yi}{(\pi - bO)^2}$$

Partant de ces paramètres, on résoudra la minimisation des moindres carrés suivante, sur toute la plage encadrant les zéros jusqu'à mi-hauteur.

$$(12) \qquad I \ (b) \ = \ \Sigma(F(pi) - y \ (pi))^2$$

avec :

$$(13) \qquad I'(b) \ ) \ 4.a. \ \Sigma(F(pi) - y(pi)).(pi\text{-}b)$$
$$(14) \qquad I''(b) \ = \ 4.a. \ \Sigma 2.a(pi\text{-}b)^2 - (F(pi) - y(pi)$$

Par cette méthode on cherche "b" tel que $I' = O$. On peut appliquer la méthode itérative de Newton pour le calcul de la variation "db" à appliquer sur "b" :

$$(15) \qquad db \ = \ - \frac{I'}{I''}$$

Cette façon de poser y(p), et de rechercher la position des zéros va permettre de travailler ensuite en tracking sur un seul paramètre, pour mesurer, en continu, avec une courte périodicité, les diamètres.

Les diamètres sont calculés à partir des valeurs b1 et b2 obtenues par minimisation des carrés pour les deux zéros extrêmes et du nombre "N" de franges intermédiaires à partir de l'équation (7), dans laquelle :

$$(16) \qquad Po \ = \ \frac{b1 - b2}{N}$$

La courbure "a" s'obtient en appliquant les points à la fonction y(p) - voir figure 4.

Bien entendu, tous les calculs et le tracé des courbes dont on a présenté le principe ci-dessus à titre d'exemple, se font par tout moyen approprié à la sortie du capteur par transformation, conversion et analyse des signaux transmis par la ligne Q dans les systèmes $C_1$ et $C_2$ et analogues.

L'invention qui vient d'être décrite s'applique aussi bien à la mesure de diamètres de fils, que de fentes dans le cas de pièces linéaires, qu'à la mesure de diamètres de pièces circulaires. Dans ce dernier cas, le phénomène de diffraction se traduire par la génération de franges annulaires concentriques permettant la détermination d'un profil de diamètres.

On comprendra ainsi que dans le cas des fils, la détermination de leur diamètre pourra se faire de façon continue en faisant défiler le fil A dans le champ des rayons lumineux $R_1$ mais en veillant à ce que toute variation de position du fil ne puisse se faire que parallèlement à lui-même au risque d'entacher les résultats d'erreurs non négligeables.

Il suffit pour cela de disposer de guides ou de supports appropriés permettant une telle déviation de position parallèlement au défilement du fil.

Il va du reste de soi que la présente invention n'a été décrite qu'à titre purement explicatif et nullement limitatif et que toute modification utile pourra y être apportée au niveau des équivalences sans sortir de son cadre.

## Revendications

1. Procédé de mesure de diamètres de fils ou de profils ou pièces circulaires par diffraction de rayons lumineux, consistant, à partir d'une source lumineuse monochromatique, à créer par filtrage de cette source, un champ de faisceau de rayons lumineux parallèles, cohérent, présentant une répartition spatiale homogène de l'énergie lumineuse, à placer ledit fil, ledit profil ou ladite pièce circulaire dans ledit champ en maintenant ce fil, ce profil ou cette pièce dans une position fixe tout en ne lui permettant des déviations de position que parallèlement à lui-même ou à elle-même, à focaliser lesdits rayons lumineux par une optique de longueur focale appropriée sur un capteur placé au point focal de ladite optique et dans un plan perpendiculaire à l'axe desdits rayons lumineux, à masquer la zone centrale recevant le flux maximum dudit faisceau, à convertir les images des franges de diffraction, situées de part et d'autre de cette zone centrale, en signaux électriques après avoir étalonné ledit capteur et, à analyser ces signaux qui sont fonction de la répartitions de l'énergie lumineuse "E"

suivant la relation :

$$E_{(x)} = d^2 \left[ \frac{\sin u}{u} \right]^2$$

ou

$$u_{(x)} = \frac{\pi.\,d.\,x.}{F.\,\delta.}$$

avec

d =     diamètre à évaluer,

x =     distance par rapport au point focal,

F =     distance focale de l'optique de focalisation des rayons lumineux,

$\delta$ =     longueur d'onde de la source de lumière monochromatique.

2. Procédé selon la revendication 1, caractérisé en ce que la répartition spatiale homogène de l'énergie lumineuse à partir de faisceaux laser est obtenue en faisant passer tout le faisceau de rayons lumineux au travers d'un orifice de dimensions microscopiques.

3. Procédé selon la revendication 1, caractérisé en ce que la répartition spatiale homogène de l'énergie lumineuse à partir de faisceaux laser est obtenue en faisant passer tout le faisceau de rayons lumineux dans un système à fibre optique.

4. Procédé selon l'une quelconque des revendications 1 à 3, caractérisé en ce que la source monochromatique est une source de rayons laser à gaz ou à semi-conducteur.

5. Procédé selon l'une quelconque des revendications 1 à 4, caractérisé en ce que le capteur doit être capable de restituer parfaitement la forme originale du signal lumineux aussi bien en amplitude qu'en position.

6. Dispositif pour la mise en oeuvre du procédé selon les revendications 1,2,4 et 5, caractérisé en ce qu'il comporte :

  – une source lumineuse monochromatique (S) ;

  – un diaphragme à orifice de dimension microscopique (M2) situé sur le chemin des rayons émis par cette source et dans l'axe optique, placé au point focal d'une lentille de collimation (L1) ;

  – une optique de focale donnée (L2) disposée dans le champ de lumière collimatée, en aval de l'objet (A) à mesurer ;

  – un capteur (C) situé dans le plan focal de cette optique (L2) et perpendiculairement à l'axe optique ;

  – un masque (M3) disposé sur la zone médiane centrale dudit capteur et,

  – un système convertisseur analyseur-calculateur (C1-C2) relié audit capteur.

7. Dispositif pour la mise en oeuvre du procédé selon les revendications 1 et 3-5, caractérisé en ce qu'il comporte :

  – une source lumineuse monochromatique (S) ;

  – un système à fibre optique ;

  – une optique de focale donnée (L2) disposée dans le champ de lumière collimatée, en aval de l'objet (A) à mesurer ;

  – un capteur (C) situé dans le plan focal de cette optique (L2) et perpendiculairement à l'axe optique ;

  – un masque (M3) disposé sur la zone médiane centrale dudit capteur et,

  – un système convertisseur analyseur-calculateur (C1-C2) relié audit capteur.


**Patentansprüche**

1. Verfahren zum Messen der Durchmesser von Drähten oder Profilen oder Rundkörpern durch Beugung von Lichtstrahlen, bei dem man mittels einer monochromatischen Lichtquelle durch Filtern dieser Quelle ein Strahlenfeld von parallelen kohärenten Lichtstrahlen erzeugt, das eine homogene räumliche Verteilung der Lichtenergie aufweist, den Draht, das Profil oder den Rundkörper in das Feld einbringt, wobei der Draht, das Profil oder der Rundkörper in einer fixierten Stellung gehalten wird, die ihm nur Positionsabweichungen parallel zu ihm erlauben, die Lichtstrahlen über eine Optik mit einer geeigneten Brennweite auf einen Aufnehmer fokussiert, der im Brennpunkt der Optik und in einer zur Achse der Lichtstrahlen senkrechten Ebene angeordnet ist, die zentrale, den maximalen Fluß der Strahlen aufnehmende Zone maskiert, die Bilder der Beugungsstreifen, die beiderseits dieser zentralen Zone liegen, in elektrische Signale umwandelt, nachdem der Aufnehmer geeicht worden ist, und diese Signale analysiert, die nach der Gleichung

$$E_{(x)} = d^2 \left[ \frac{\sin u}{u} \right]^2$$

Oder

$$u_{(x)} = \frac{\pi \, d \, x}{F \, \delta}$$

von der Verteilung der Lichtenergie "E" abhängig sind, wobei

d = zu bestimmender Durchmesser,
x = Abstand, bezogen auf den Brennpunkt,
F = Brennweite der Optik zur Fokussierung der Lichtstrahlen,
δ = Wellenlänge der monochromatischen Lichtquelle.

2. Verfahren nach Anspruch 1, dadurch gekennzeichnet, daß die homogene räumliche Verteilung der Lichtenergie mittels Laserstrahlen erhalten wird, indem man das gesamte Bündel der Lichtstrahlen durch eine Öffnung mit mikroskopischen Abmessungen hindurchgehen läßt.

3. Verfahren nach Anspruch 1, dadurch gekennzeichnet, daß die homogene räumliche Verteilung der Lichtenergie mittels Laserstrahlen erhalten wird, indem man das gesamte Bündel der Lichtstrahlen durch ein Lichtwellenleitersystem hindurchgehen läßt.

4. Verfahren nach einem der Ansprüche 1 bis 3, dadurch gekennzeichnet, daß die monochromatische Quelle eine Gaslaser- oder eine Halbleiterlaser-Strahlenquelle ist.

5. Verfahren nach einem der Ansprüche 1 bis 4, dadurch gekennzeichnet, daß der Aufnehmer in der Lage sein muß, die ursprüngliche Form des Lichtsignals sowohl bezüglich Amplitude als auch Position richtig wiederzugeben.

6. Vorrichtung zur Durchführung des Verfahrens nach den Ansprüchen 1, 2, 4 und 5, dadurch gekennzeichnet, daß sie umfaßt:
– eine monochromatische Lichtquelle (S),
– eine Blende (M2) mit einer Öffnung von mikroskopischer Abmessung, die auf dem Weg der von dieser Quelle emittierten Strahlen und in der optischen Achse liegt und im Brennpunkt einer Kollimationslinse (L1) angeordnet ist,
– eine Optik (L2) mit gegebener Brennweite, die im Feld des kollimierten Lichtes hinter dem zu messenden Gegenstand (A) angeordnet ist,
– einen Aufnehmer (C), der in der Brennebene dieser Optik (L2) und senkrecht zur optischen Achse liegt,
– eine Maske (M3), die auf der zentralen Mittelzone des Aufnehmers angeordnet ist, und
– ein an den Aufnehmer angeschlossenes Analysier-Rechner-Umwandlersystem (C1-C2).

7. Vorrichtung zur Durchführung des Verfahrens nach den Ansprüchen 1 und 3 bis 5, dadurch gekennzeichnet, daß sie umfaßt:
– eine monochromatische Lichtquelle (S),
– ein Lichtwellenleitersystem,
– eine Optik (L2) mit gegebener Brennweite, die im Feld des kollimierten Lichtes hinter dem zu messenden Gegenstand (A) angeordnet ist,
– einen Aufnehmer (C), der in der Brennebene dieser Optik (L2) und senkrecht zur optischen Achse liegt,
– eine Maske (M3), die auf der zentralen Mittelzone des Aufnehmers angeordnet ist, und
– ein an den Aufnehmer angeschlossenes Analysier-Rechner-Umwandlersystem (C1-C2).

**Claims**

1. Method of measuring the diameter of wires, profiles or circular parts by diffraction of light rays consisting in filtering a monochromatic light source to produce a coherent beam field of parallel light rays having a homogeneous spatial distribution of luminous energy, placing said wire, said profile of said circular part in said field with said wire, said profile or said part held in a fixed orientation, allowing deviations of its positions only parallel to itself, focussing said light rays by means of an optical system of appropriate focal length onto a sensor disposed at the focus of said optical system and in a plane perpendicular to the axis of said light rays, masking the central area receiving the maximun flux from said beam, converting the images of the diffraction fringes to either side of this central area into electrical signals after calibrating said sensor, and analyzing said signals which are conditioned by the distribution of the luminous energy to the equation:

$$E_{(x)} = d^2 \left[\frac{\sin u}{u}\right]^2$$

or

$$u_{(x)} = \frac{\pi . d . x.}{F . \delta}$$

where
d = diameter to evaluate,
x = distance from focal point,
F = focal length of the light ray focusing optical system,
$\delta$ = wavelength of the monochromatic light source.

2. Method according to claim 1 characterized in that the homogeneous spatial distribution of the luminous energy from laser beams is obtained by having all of the beam of light rays pass through a microscopic orifice.

3. Method according to claim 1 characterized in that the homogeneous spatial distribution of the luminous energy from laser beams is obtained by having all of the beam of light rays pass through a fibre optic system.

4. Method according to any one of claims 1 through 3 characterized in that the monochromatic source is a gas or semiconductor laser ray source.

5. Method according to any one of claims 1 through 4 characterized in that the sensor must be capable of restoring perfectly the original form of the luminous signal in terms of amplitude and position.

6. Device for implementing the method according to claims 1, 2, 4 and 5 characterized in that it comprises:
– a monochromatic light source (S);
– a diaphragm (M2) having a microscopic orifice on the path of the rays emitted by said source and on the optical axis placed at the focal print of a collimator lens (L1);
– an optical system (L2) of specific focal length disposed in the collimated light field, downstream from the object (A) to be measured;
– a sensor (C) located in the focal plane of said optical system (L2) and perpendicular to :aid optical axis;
– a mask (M3) disposed over the central median area of said sensor, and
– an analyser-calculator converter system (C1-C2) connected to sail sensor.

7. Device for implementing the method according to claims 1 and 3-5, characterized in that it comprises:
– a monochromatic light source (S);
– an optic fibre system;
– an optical system (L2) of specific focal length disposed in the collimated light field, downstream from the object (A) to be measured;
– a sensor (C) located in the focal plane of said optical system (L2) and perpendicular to said optical axis;
– a mask (M3) disposed over the central median area of said sensor, and
– an analyzer-calculator converter system (C1-C2) connected to said sensor.

Fig. 1

Fig. 2

Fig.3

$E(x)$

$V(p)$

P22  P21  P0  x0  x0  P11  P12

$x = N.x0$

$(x = \alpha.p)$

Fig.4

$y(p) = a.(p-b)^2$

b1  b2

EP 0 383 832 B1